# FASCICULE DE BREVET EUROPEEN

(11) **EP 0 456 590 B1**
(45) Date de publication et mention de la délivrance du brevet: **13.04.1994**
(21) Numéro de dépôt: 91420148.8
(22) Date de dépôt: 03.05.1991
(51) Int. Cl.: B24B 15/04, B23Q 11/00

(54) **Dispositif de rectification de la tête d'une soupape, notamment d'un moteur à combustion interne**
Ventilkopf-Schleifgerät, insbesondere für einen Verbrennungsmotor
Valve head grinding device, particularly for an internal combustion engine

(30) Priorité: 07.05.1990 FR 9006192; 10.09.1990 FR 9011354
(43) Date de publication de la demande: 13.11.1991
(73) Titulaire: SERDI - SOCIETE D'ETUDES DE REALISATION ET DE DIFFUSION INDUSTRIELLES, Annecy (FR)
(72) Inventeur: Leroux, Jacques, F-74940 Annecy le Vieux (FR); Vivier, Patrick, F-74210 Faverges (FR)
(74) Mandataire: Guerre, Dominique

(56) Documents cités:
- DE-A- 1 951 575
- DE-A- 3 041 722
- DE-C- 394 871
- DE-C- 706 721
- FR-A- 1 066 669
- FR-A- 1 415 175
- US-A- 1 702 267
- US-A- 1 786 022
- US-A- 2 618 105
- US-A- 4 270 427

## Description

La présente invention concerne un dispositif de rectification de la tête d'une soupape, notamment d'un moteur à combustion interne, selon le préambule de la revendication 1.

La présente invention est décrite et explicitée par référence aux soupapes de moteurs à combustion thermique, notamment de moteurs à combustion interne. Mais il doit être entendu que la portée de la présente invention ne saurait être limitée à ce secteur technique, car bien d'autres organes ayant la forme d'une soupape, ou qualifiés comme tels, doivent être usinés ou rectifiés, pour s'adapter à un siège complémentaire de fermeture étanche ; à titre d'exemple d'un autre secteur technique auquel la présente invention peut être appliquée, on peut citer les vannes d'étanchéité.

Par "rectification", on entend un usinage par enlèvement de métal, qu'il s'agisse d'un usinage avec un outil de coupe, par enlèvement d'un copeau métallique, ou d'un usinage du type meulage, par enlèvement de particules métalliques. Un tel usinage peut être effectué, aussi bien à titre de finition, c'est-à-dire directement après la fabrication d'une tige de soupape, qu'à titre de réparation ou rénovation, c'est-à-dire pour conformer la tête d'une soupape usagée, en profil et en dimensions, à ceux d'un siège de soupape neuf ou rectifié.

Par "dispositif", on entend des appareils ou installations, pouvant aller de l'outillage léger, du type outillage d'établi dans un atelier de réparation, à une machine beaucoup plus lourde, du type machine-outil, telle qu'utilisée dans les usines de production en série de moteurs thermiques.

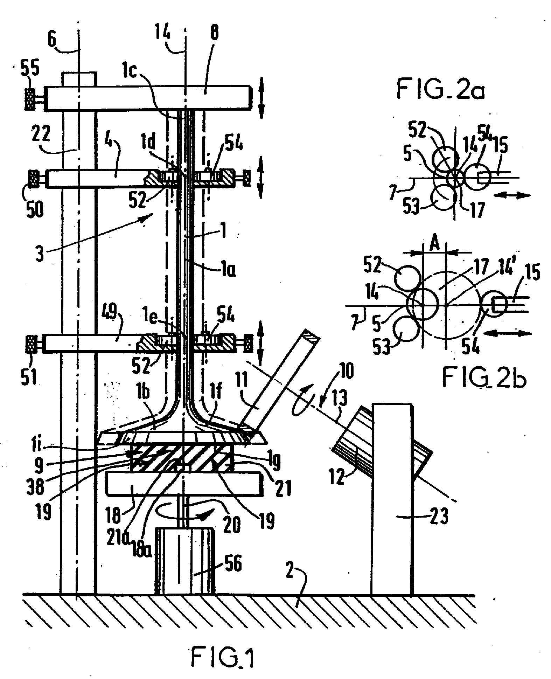

De manière générale, et comme représenté plus particulièrement à la figure 1, une soupape 1 comprend une tige 1a de forme cylindrique ou tubulaire, et une tête 1b de forme évasée en continu avec la tige. Cette tête 1a comporte une face plane avant ou antérieure 1g, perpendiculaire à l'axe de soupape, et opposée à l'extrémité de la tige, ou queue 1c. La face à usiner ou rectifier est la face arrière 1f, selon une surface conique 1i par exemple, concentrique à l'axe de la soupape, ou axe de la tige 1a.

En 1950, conformément au document US-C-2 618 105, on a décrit et proposé un dispositif de rectification de la tête d'une soupape, disposée horizontalement, comprenant :
- un bâti ayant la forme d'une plaque horizontale, comportant une partie droite et une partie disposée obliquement par rapport à cette dernière
- un moyen de soutien en rotation de la tige de soupape, monté sur le bâti, comprenant deux supports espacés l'un de l'autre, alignés selon une direction de référence horizontale ; chaque support comprend, d'une part un berceau en "V", de réception en rotation d'une zone d'appui intercalaire de la tige de soupape, dont l'ouverture croît en largeur vers l'extérieur et vers le haut, de part et d'autre d'un plan vertical de référence et de symétrie, parallèle à ou passant par la direction de référence précitée, et d'autre part une touche mobile d'appui en rotation, ayant la forme d'un flanc d'une pièce d'appui, disposé et en regard du berceau de réception, et formant avec ce dernier une lunette de rotation d'une zone tourillonnée intercalaire de la tige de soupape
- une butée mobile d'appui en rotation contre la queue de soupape, dirigée selon la directon horizontale de référence
- un moyen d'entraînement en rotation de la soupape, disposé du côté opposé au moyen de soutien en rotation précédemment décrit, comprenant un organe en caoutchouc, rotatif et menant, d'accouplement en rotation avec la tête de soupape, par sa face avant opposée à la face arrière à usiner
- des moyens d'ajustement en rotation, constitués par la masse visco-élastique de l'organe rotatif menant en caoutchouc, permettant de compenser le mésalignement entre l'axe de rotation de l'organe rotatif menant et l'axe de rotation rigide de la tige de soupape, au cours de sa rectification
- un poste d'usinage, monté sur le bâti en relation angulaire avec le moyen de soutien en rotation précédemment décrit, comprenant une meule ou outil d'usinage de la tête de soupape, par sa face arrière adjacente à la tige, et un moyen d'entraînement en rotation de l'outil d'usinage, autour d'un axe d'usinage horizontal, faisant un angle aigu avec l'axe de rotation rigide de la tige de soupape.

Par ailleurs, selon ce document, pour déterminer l'inclinaison de l'usinage ou rectification de la tête de soupape, d'une part le moyen de soutien en rotation de la soupape peut être orienté à plat sur le bâti, par rotation autour d'un axe vertical, et d'autre part le poste d'usinage, quant à lui, est disposé de manière fixe sur le bâti, de telle sorte que l'axe d'usinage demeure toujours le même, quelle que soit l'inclinaison de la surface rectifiée par rapport à l'axe de la soupape.

Conformément aux documents US-C-1 702 267 et US-C-1 786 022, on a décrit des bancs de rectification de soupapes, assez proches de celui décrit par référence au document US-C-2 618 105, et il n'apparaît donc pas nécessaire de préciser beaucoup plus le contenu de ces deux autres documents.

Les dispositifs de rectification proposés par les documents examinés précédemment, travaillant à plat dans un plan horizontal, et donc avec la soupape disposée horizontalement, et supportée d'un seul côté en deux points, ne permettent pas en pratique d'obtenir une rectification concentrique avec la tige de soupape, en tout cas avec la précision et les tolérances requises aujourd'hui pour la performance des moteurs à combustion interne.

Cette concentricité ou coaxialité de la rectification exige en fait d'exercer sur la soupape en rotation, que ce soit sur la tête et/ou sur la tige, un minimum d'efforts ou contraintes, puisque ces derniers génèrent nécessairement une déformation ou un déplacement de la tête par rapport à l'axe de rotation, et donc un défaut de concentricité ou de régularité de la rectification.

Or précisément, si l'on examine une soupape, il s'agit en soi d'une pièce déséquilibrée, dont le centre de gravité se situe sur la tête, et présentant une tige de longueur plus importante que la hauteur de la tête. Dans ces conditions, la moindre contrainte en flexion ou torsion peut effectivement déformer ou déplacer la tête par rapport à la tige, ou inversement.

Le fait de disposer horizontalement la soupape, en la maintenant en rotation par sa tige uniquement, comme proposé par le document US-C-2 618 105, ne fait qu'augmenter le déséquilibre observé précédemment, puisqu'en particulier la partie la plus lourde, à savoir la tête, se trouve alors suspendue, par rapport à la tige, elle-même fermement soutenue en deux points. Dans ces conditions, il est normal d'observer flexion et torsion sur la tête de soupape en rotation, et donc un usinage peu précis ou régulier sur la partie à rectifier.

Bien entendu, ce qui vient d'être observé est encore plus critique pour des soupapes de taille et poids importants, comme celles d'un moteur de forte puissance. En particulier, pour de telles soupapes, il apparaît exclu d'utiliser la technique de rectification proposée par le document US-C-2 618 105.

La présente invention a donc pour objet de remédier aux inconvénients observés précédemment. Plus précisément, l'invention a pour objet un dispositif de rectification, limitant les contraintes exercées sur la soupape, pratiquement au seul roulement nécessaire à la rotation de la tête pendant l'usinage ou la rectification.

Selon l'invention un dispositif du genre précédemment décrit se caractérise en ce que, en coopération, premièrement le moyen de soutien en rotation de la tige de soupape est disposé fixement et verticalement sur le bâti, pour établir un référentiel fixe et vertical de l'axe de rotation de la tige de soupape, situé dans un plan vertical de référence selon le diamètre de la tige de soupape, deuxièmement le moyen d'entraînement en rotation de la soupape est disposé verticalement, au-dessous du moyen de soutien en rotation, et troisièmement le poste d'usinage est monté sur le bâti, de manière mobile et orientable, autour d'un axe horizontal, pour régler l'axe d'usinage en orientation par rapport au référentiel fixe et vertical de la tige de soupape.

La position verticale, tête en bas, retenue selon la présente invention pour rectifier ou usiner la soupape, apporte en outre avec elle des avantages déterminants.

Il s'agit tout d'abord d'une position auto-stable, indifférente à la gravité, et en quelque sorte auto-équilibrée de la soupape. De la sorte, les contraintes exercées sur la tête ne sont plus que celles générées par l'entraînement en rotation de sa face avant.

Cette position auto-stable permet d'envisager sans difficulté un chargement automatique du dispositif de rectification, ce qui serait beaucoup plus difficile pour une machine à positionnement horizontal de la soupape, compte tenu du déséquilibre apporté par la tête.

Cet usinage en position verticale, et tête en bas, permet une meilleure ergonomie du dispositif de rectification, et permet à l'opérateur d'avoir directement sous les yeux les opérations de rectification.

Enfin, le principe retenu selon l'invention apparaît compatible avec toutes formes, toutes tailles et dimensions des soupapes.

La présente invention est maintenant décrite par référence aux dessins annexés, dans lesquels :
- la figure 1 représente, de manière schématique et en vue verticale, un dispositif de rectification conforme à l'invention,
- les figures 2a et 2b représentent de manière schématique, en coupe horizontale au niveau de l'un des supports du dispositif selon Fig.1, l'adaptation de la lunette de rotation obtenue selon l'invention, aux diamètres différents de la tige de la soupape à rectifier ou usiner
- la figure 3 représente en coupe verticale, de manière schématique, un autre mode d'exécution du moyen d'entraînement en rotation de la soupape, conforme à la présente invention
- la figure 4 représente selon la ligne de coupe IV.IV de la figure 7, un autre mode d'exécution du moyen d'entraînement en rotation de la soupape, toujours conforme à la présente invention
- la figure 5 représente, en coupe horizontale selon la ligne V.V de la figure 4, le moyen d'entraînement en rotation selon Fig.4
- la figure 6 représente en coupe horizontale, selon la ligne VI-VI de la figure 4, le moyen d'entraînement en rotation selon Fig.4.
- la figure 7 représente en coupe horizontale selon la ligne VII-VII de la figure 4, le moyen d'entraînement en rotation selon Fig.4
- la figure 8 représente un autre mode d'exécution de la machine représentée schématiquement aux figures 1 et 2, vue de face
- la figure 9 représente, avec arrachements partiels en coupe verticale, la machine représentée à la figure 8
- la figure 10 représente, de manière schématique et à des fins d'explication, le système d'équilibrage et de commande retenu pour la machine selon figures 8 et 9
- la figure 11 représente en coupe verticale, selon les plans de coupe appropriés, les organes de blocage du secteur d'orientation et du chariot du poste d'usinage, selon figure 10 par exemple
- la figure 12 représente, toujours en coupe horizontale, une variante de réalisation d'un support faisant partie d'un dispositif de rectification tel que représenté aux figures 1 et 2
- de manière analogue à la figure 10, la figure 13 représente de manière schématique un autre système d'équilibrage des masses appartenant à un dispositif selon figures 8 et 9
- la figure 14 représente, en coupe verticale, un dispositif de préréglage de la position en translation et de la hauteur du moyen d'entraînement en rotation de la soupape.

Un dispositif de rectification selon l'invention permet d'usiner la tête 1b d'une soupape 1, comportant par ailleurs une tige 1a terminée par une queue 1c. La tête 1b est disposée radialement par rapport à la tige 1a, et présente une face avant 1g sensiblement plane, et une face arrière 1f adjacente à la tige 1a. C'est le chant 1i de la tête 1b, situé entre la face arrière 1f et la face avant 1g qu'il convient d'usiner ou rectifier, selon tout profil transversal approprié, par exemple avec un ou plusieurs angles, et selon toutes dimensions ou côtes déterminées par celles du siège de soupape auquel est destiné la soupape rectifiée. Le chant 1i présente par exemple une forme générale tronconique autour de l'axe de la tige 1a. De manière générale, la soupape usinée présente pour l'essentiel une symétrie de révolution autour de l'axe précité. Mais bien entendu, en pratique, la soupape traitée peut présenter différents défauts, tels que :
- jeu axial entre la tête de soupape 1b et la tige 1a
- défaut de perpendicularité de la tête 1b par rapport à la tige 1a
- défaut de planéité de la face avant 1g.

La rectification selon la présente invention permet, comme décrit ci-après, de rectifier le chant 1i, dans l'axe de la tige 1a, nonobstant les défauts précités rencontrés en pratique.

Pour ce faire, un dispositif selon la présente invention comporte de manière générale :
- un bâti rigide 2
- un moyen 3 de soutien en rotation de la tige 1a, constituant un référentiel rigide vertical de l'axe 14 ou 14' de rotation de la tige précitée, dans un plan vertical de référence 7 correspondant au plan de la figure 1, quel que soit le diamètre de la tige 1a de la soupape rectifiée, comme montré les figures 2a et 2b ; ces dernières montrent en effet un déplacement ou écart "A", dans le plan de référence 7, entre une tige de diamètre relativement faible, en trait plein, d'axe 14, et une tige de diamètre relativement important, en trait mixte, d'axe 14'
- une butée 8 d'appui en rotation contre la queue 1c de soupape
- un moyen 9 d'entraînement en rotation de la soupape, disposé verticalement, en dessous et du côté opposé au moyen 3 de soutien en rotation et au poste d'usinage 10 décrit ci-après
- le poste 10 d'usinage, monté de manière orientable sur le bâti 2, en relation angulaire, par exemple selon un angle obtus, avec le moyen 3 de soutien en rotation

Le moyen 3 de soutien en rotation comprend :
- une potence ou glissière 22 montée verticalement sur le bâti 2, selon une orientation ou direction de référence représentée par le trait mixte 6
- deux supports 4 et 49 alignés et superposés sur la potence 22, selon la direction verticale de référence 6, disposés à distance l'un de l'autre, et réglables en position sur la potence ou glissière 22 par des vis d'ajustement 50 et 51 ; chaque support comporte, comme représenté aux figures 2a et 2b, un berceau 5, constitué par deux galets 52 et 53, disposés en vis-à-vis symétriquement par rapport au plan de référence 7, ainsi qu'une touche mobile 15 ou 16 (seule la touche 15 a été représentée aux figures 2a et 2b), d'appui en rotation contre la tige 1a, disposée en regard du berceau 5 de réception, et comportant à cet effet un galet 54 à son extrémité libre.

Il résulte de la description précédente que le berceau 5 sert à la réception en rotation d'une zone d'appui intercalaire 1d ou 1e de la tige 1a de soupape, et que, comme montré par les figures 2a ou 2b, l'ouverture du berceau 5 croît en largeur vers l'extérieur, symétriquement de part et d'autre du plan vertical de référence 7, lequel est parallèle ou passe par la direction de référence 6.

Toujours d'après la description précédente, chaque touche 15 ou 16 étant mobile dans le plan vertical de référence 7 et perpendiculairement à la direction de référence 6, chaque berceau 5 de réception forme avec la touche d'appui en rotation 15 ou 16 en vis-à-vis, une lunette 17 de rotation d'une zone tourillonnée 1d ou 1e, intercalaire de la tige de soupape 1a, les deux zones précitées 1d et 1e étant proches respectivement des deux extrémités de la tige 1a. Grâce à la mobilité de la touche 15 ou 16, la lunette de rotation 17 peut être adaptée au diamètre effectif de la tige 1a, comme montré aux figures 2a et 2b.

La butée 8 d'appui en rotation contre la queue 1c est montée à l'extrémité haute de la potence 22, et est réglable en position par une vis 55, comme chaque support 4 ou 49. La butée 8 est donc dirigée selon la direction de référence 6, en étant indépendante des deux supports 4 et 49.

Le moyen 9 d'entraînement en rotation de la soupape comprend :
- un organe 18 rotatif menant, sous la forme d'un plateau entraîné en rotation autour de l'axe 20 par un premier moteur 56 ; cet organe sert directement ou indirectement à l'accouplement en rotation avec la tête 1b de soupape, par sa face avant 1g, adjacente à la face ou chant 1i à usiner
- des moyens 19 prévus, entre l'organe menant 18 et la face avant 1g de la soupape, pour ajuster dans le plan de référence 7, l'axe moteur de rotation 20 de l'organe rotatif, avec l'axe 14 vertical et rigide de la tige de soupape, déterminé par les deux zones tourillonnées 1d et 1e, dans les deux lunettes 17 de rotation des deux supports 4 et 5 respectivement ; ces moyens 19 consistent simplement en une galette 21 d'un matériau visco-élastique, tel que du caoutchouc, câlée en rotation sur le plateau 18, grâce à une nervure diamétrale 18a prévue sur ce dernier et une rainure correspondante 21a, prévue sur le tampon 21.

Ce dernier assure plusieurs fonctions décrites ci-après :
1) il permet d'accoupler en rotation, par frottement, l'organe rotatif menant 18 et la tête de soupape 1b, et plus précisément sa face avant 1g ; en réglant par la butée 8 l'appui exercé sur la queue 1c de la soupape 1, on peut ainsi comprimer plus ou moins le tampon 21, dans la direction de référence 6, et régler ainsi la contrainte en rotation exercée sur la tête 1b
2) l'organe rotatif 18 menant étant fixe, ainsi que l'axe moteur 20 de rotation, le tampon 21 forme joint d'accouplement en rotation entre l'organe rotatif 18 et la face avant 1g de la tête 1b de soupape, tout en permettant de compenser, par sa flexion élastique en rotation entre l'axe moteur 20 et l'axe de rotation rigide 14, tout mésalignement latéral entre ces deux axes, et ceci en transférant le couple moteur vers la tête 1b
3) le tampon 21 étant élastique au cisaillement, il forme moyen d'orientation angulaire 38 entre l'organe rotatif menant 18 et la face avant 1g de la tête de soupape, ce qui permet de compenser tout défaut de perpendicularité de la tête de soupape précitée, par rapport à l'axe rigide 14 de rotation, déterminé par les deux zones tourillonnées 1d 1e de la tige 1a
4) la face extérieure du tampon 21 étant en contact de la face avant 1g de la tête de soupape 1b, le matériau visco-élastique employé permet d'absorber tout défaut local de planéité de la face avant 1g

Le poste 10 d'usinage est monté sur une équerre verticale 23 solidaire du bâti 2. Ce poste comprend un outil 11 d'usinage de la tête de soupape, tel qu'une meule, par la face arrière 1f de la soupape 1. Cet outil est entraîné en rotation par un deuxième moteur 12, autour d'un axe d'usinage 13. L'ensemble 11/12 est orientable sur la potence 23, autour d'un axe horizontal, de manière à régler selon l'usinage à effectuer l'axe 13 par rapport à la direction verticale de référence 6 ou l'axe rigide 14 de rotation de la tige 1a.

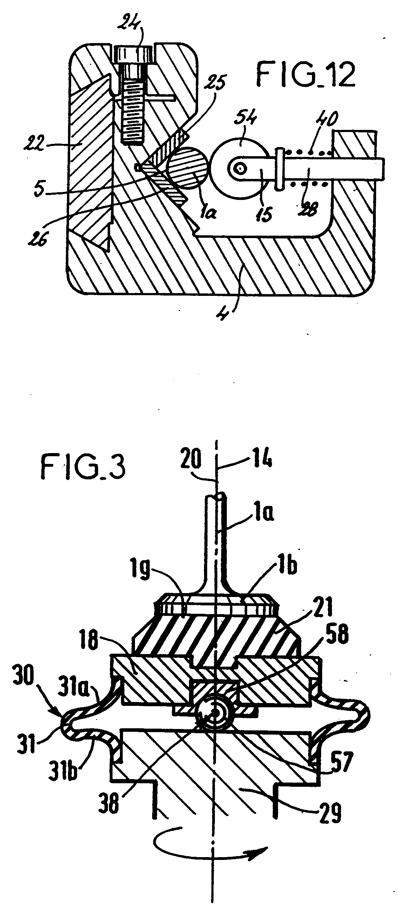

Conformément à la figure 3, l'organe rotatif menant 18, ayant la forme d'un disque, peut être déplacé en translation, pour aligner en fonctionnement, c'est-à-dire pendant l'usinage, l'axe moteur 20 de rotation avec l'axe de rotation rigide 14. A cette fin, l'organe rotatif menant 18 est attaqué par un arbre tournant 29, ayant également la forme d'un disque, et un soufflet 31 élastique circonscrivant les deux disques 18 et 29, est disposé entre ces derniers. Le soufflet 31 présente une section transversale en "U", dont les deux branches 31a et 31b sont solidaires respectivement des deux disques 18 et 29. L'organe d'accouplement 30 constitué par le soufflet 31 précédemment décrit, permet de compenser tout mésalignement angulaire et/ou latéral entre l'axe de rotation rigide 14 et l'axe de rotation de l'arbre ou disque tournant 29.

Conformément au mode d'exécution selon la figure 3, un moyen spécifique d'orientation angulaire 38 est disposé entre le disque menant 18 et le disque tournant 29, pour compenser tout défaut de perpendicularité de la tête de soupape 1b par rapport à l'axe rigide 14 de rotation, déterminé comme précédemment. Ce moyen spécifique consiste en une bille 57, montée sur le disque menant 18 par l'intermédiaire d'un siège à billes 58, et la bille 57 est susceptible de rouler sur la face intérieure du disque tournant 29, dans toutes les directions, tout en permettant une articulation du type rotule du disque menant 18 sur la bille 57. Au repos, cette bille 57 se trouve disposée au centre des disques menant 18 et tournant 29.

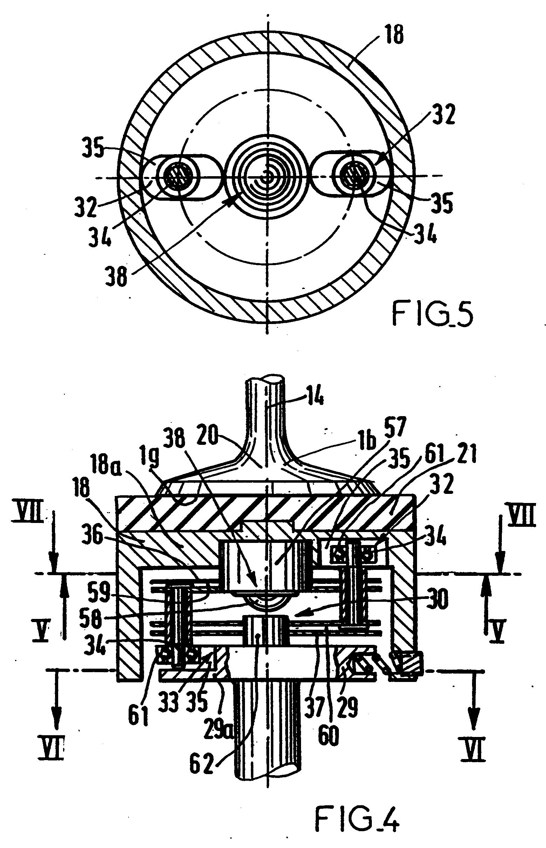

Conformément aux figures 4 à 7, on décrit ci-après une autre solution permettant de déplacer en translation l'organe rotatif menant 18, tout en compensant tout mésalignement angulaire et/ou latéral entre l'axe de rotation rigide 14 et l'arbre tournant 29. Cette solution présente l'avantage, par rapport aux solutions décrites précédemment, de ne générer pratiquement aucune contrainte sur la tête de soupape 1b, pendant l'usinage.

Conformément aux figures 4 à 7, l'organe rotatif menant 18 ayant la forme d'une cloche, constitue un premier moyeu. Et l'arbre tournant 29 a la forme d'une plaque, coiffée par la cloche 18, constituant un deuxième moyeu. Comme précédemment, c'est-à-dire par référence à la figure 3, le premier moyeu menant 18 et le deuxième moyeu tournant 29 comprennent respectivement deux plaques 18a et 29a cylindriques en vis-à-vis, en appui l'une contre l'autre, à la fois par l'intermédiaire d'un organe spécifique 30 d'accouplement décrit ci-après, et par un moyen d'orientation angulaire 38, du même type que celui décrit par référence à la figure 3.

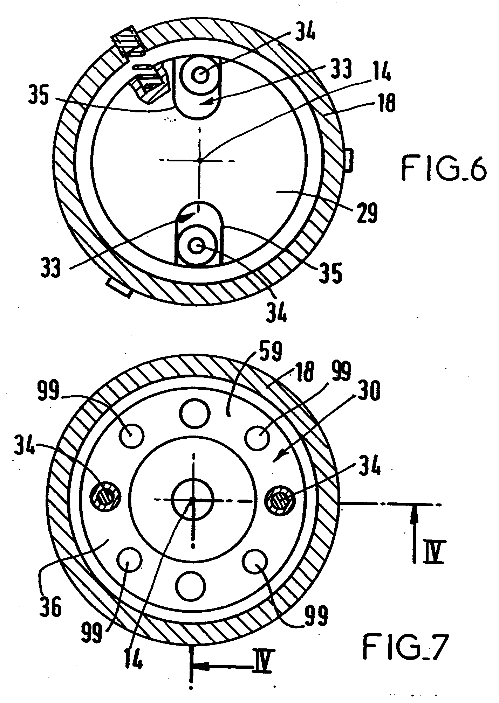

L'organe 30 d'accouplement comprend deux paires de rondelles identiques 59 et 60, solidarisées l'une à l'autre par quatre entretoises 99, montrées en section à la figure 7, et disposées à 90° les unes par rapport aux autres, par rapport à l'axe 14.

Deux glissières 32, représentées aux figures 4 et 5, et alignées sont disposées du côté supérieur de l'organe d'accouplement 30. Deux glissières 33, représentées aux figures 4 et 6, et alignées sont disposées du côté inférieur du même organe d'accouplement 30. Comme montré par le rapprochement des figures 6 et 7, les glissières 33 sont alignées selon une direction perpendiculaire à la direction d'alignement des glissières 32. Chaque glissière 32 ou 33 de jeu axial est obtenue par la coopération, d'une part d'un axe 34, entretoisant les deux paires de rondelles 59 et 60, dont la tête extérieure est pourvue d'un roulement 61, et d'autre part d'une rainure 35, obtenue par moulage en creux dans la plaque cylindrique 18a ou 29a, ouverte en vis-à-vis de la tête de l'axe 34, avec son roulement 61.

Il résulte de la déscription précédente, que dans une direction de jeu axial donnée, deux axes 34 formant parties mâles, sont montés sur l'organe d'accouplement 30, à 180° par rapport à l'axe vertical 14 ou 20 des deux moyeux 18 et 29, et que les deux rainures correspondantes 35, formant parties femelles, sont obtenues sur le moyeu considéré, également à 180° l'une de l'autre, par rapport à l'axe 14 ou 20 des deux moyeux. Par ailleurs, comme à la figure 3, un mécanisme d'orientation à rotule 57/58, est en appui sur une butée 62 solidaire de la face intérieure de la plaque 18a du moyeu tournant 29.

Bien entendu, la solution précédemment décrite peut être inversée, en ce sens que les parties mâles des glissières peuvent être prévues sur les moyeux 18 et 29, tandis que les parties femelles peuvent être prévues sur l'organe 30 d'accouplement.

Conformément à l'invention, et de manière non représentée aux dessins, l'organe 18 rotatif menant peut être déplacé en translation, dans le plan vertical de référence 7, en coopérant avec des moyens de réglage ou ajustement de l'axe moteur 20 de rotation et de l'axe 14 de rotation rigide. Ces moyens consistent alors en un organe de positionnement, de type mécanique ou autre, de l'organe rotatif menant 18 dans le plan de référence précité, à proportion de la position de l'axe rigide 14 de rotation, dans le même plan de référence. Ces moyens d'ajustement peuvent comprendre un organe de mesure de la position de l'axe rigide de rotation 14 ou 14', et un organe de correction de la position de l'organe rotatif 18 menant, agissant à proportion de la mesure faîte par l'organe de mesure.

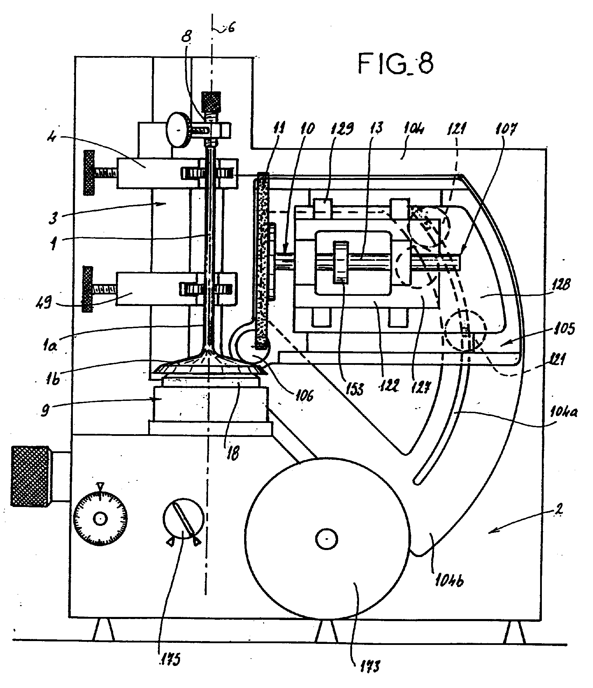

Conformément aux figures 8 à 10, on a représenté un mode de réalisation de la machine décrite schématiquement par référence aux figures 1 et 2, les références numériques communes désignant les mêmes éléments ou organes.

Conformément à ces figures, pour supporter et positionner, à la fois angulairement et en distance, le poste 10 d'usinage, par rapport à la direction verticale 6 de référence, et donc par rapport à l'axe de la soupape 1, les modalités constructives suivantes sont adoptées :
- un panneau vertical arrière 104 appartenant au bâti 2 s'étend à la fois selon la direction de référence, c'est-à-dire verticalement, et perpendiculairement à cette dernière, c'est-à-dire horizontalement
- un secteur d'orientation 105 d'extension parallèle au panneau précité, ayant la forme générale d'un trapèze avec un bord circulaire, monté mobile en rotation sur le bâti 2 autour d'un axe fixe horizontal 106, avec un jeu fonctionnel permettant le glissement à plat du secteur 105 sur le panneau 104 ; l'axe 106 d'orientation est perpendiculaire ou orthogonal à la direction de référence 6, tout en étant fixé et monté sur le bâti ou châssis rigide 2
- un chariot 107 est monté mobile en translation sur le secteur d'orientation 105, la mobilité en translation correspondant à un axe de translation 108, orthogonal à l'axe d'orientation 106
- un plateau 122 est monté mobile en translation sur le chariot 107, perpendiculairement à la direction de translation 108, ce plateau supportant le poste d'usinage 10, et plus précisément l'axe de rotation 13 avec la meule circulaire 11.

Pour la clarté de la description, l'ensemble articulé autour de l'axe fixe de rotation 106, comprenant le secteur d'orientation 105, le chariot 107, et le poste d'usinage 10, ainsi que tous les organes introduits ci-après supportés par les éléments précités, sera désigné sous la dénomination commune d'"équipage".

Il résulte de la description précédente que le poste d'usinage 10 dispose de trois degrés de liberté, à savoir :
- un premier degré en rotation autour de l'axe 106, grâce au secteur d'orientation 105,
- un deuxième degré en translation selon la direction 108 orthogonale à l'axe 106,
- et un troisième degré en translation, perpendiculairement à la direction 108.

Pour commander le poste d'usinage 10 selon tous ces degrés, différents moyens de commande sont prévus, avec les boutons ou volants de manoeuvre rapportés sur la face avant du bâti 2.

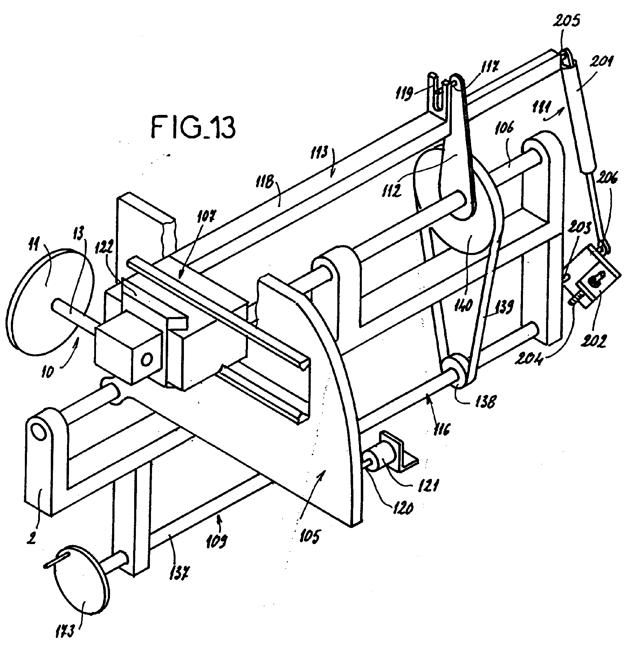

Un organe de blocage 115, commandé selon deux positions par un bouton 175, présente deux fonctions distinctes, l'une d'arrêt en translation du chariot 107, dans laquelle le secteur 105 d'orientation demeure libre en rotation autour de l'axe 106, et l'autre d'arrêt en rotation du secteur 105, dans laquelle le chariot 107 demeure libre en translation sur le secteur 105. Comme montré par la figure 11, les fonctions précitées sont obtenues par la disposition et coopération des organes suivants.

Un premier organe de blocage est constitué des éléments suivants :
- le panneau 104 comporte un embrèvement 104b, ayant la forme d'un secteur circulaire centré sur l'axe 106, pour loger le secteur 105, tout en autorisant sa course angulaire autour de l'axe 106 ; la face inférieure du panneau 104, au niveau de l'embrèvement 104b, comporte une glissière de guidage 104a, ayant la forme d'un arc de cercle centré sur l'axe d'orientation 106
- le secteur d'orientation 105 comporte deux tétons 120, passant au travers de la glissière 104a, avec un jeu fonctionnel approprié, disposés de part et d'autre dudit secteur selon le chemin circulaire déterminé par la glissière 104a
- les deux tétons 120 comportent chacun une tête 121 de blocage, actionnable pneumatiquement par exemple, disposée de l'autre côté du panneau 104, par rapport au secteur 105, et déplaçable selon la hauteur d'un téton 120 ; un tel déplacement permet aux deux têtes 121 de venir au contact de la face opposée du panneau 104, pour arrêter la rotation du secteur 105.

Grâce à cet agencement, le secteur 105 peut être bloqué en rotation de manière ferme et rigide, selon un triangle déterminé comme montré par la figure 8, par l'axe 106 et les deux têtes de blocage 121.

Un deuxième organe de blocage, assurant l'arrêt et la libération du chariot 107 par rapport au secteur 105, est obtenu par la coopération des moyens suivants, montrés uniquement à la figure 11 :
- le secteur d'orientation 105 comporte une lumière de guidage 105a, ayant la forme d'une droite parallèle à la direction de translation 108 du chariot 107
- le chariot 107 comporte un téton 126 traversant la lumière 105a, avec un jeu fonctionnel approprié
- une tête 127 de blocage est déplaçable selon la hauteur du téton, de l'autre côté du secteur, pour venir de manière réversible au contact de la surface arrière dudit secteur, et arrêter en translation le chariot 107.

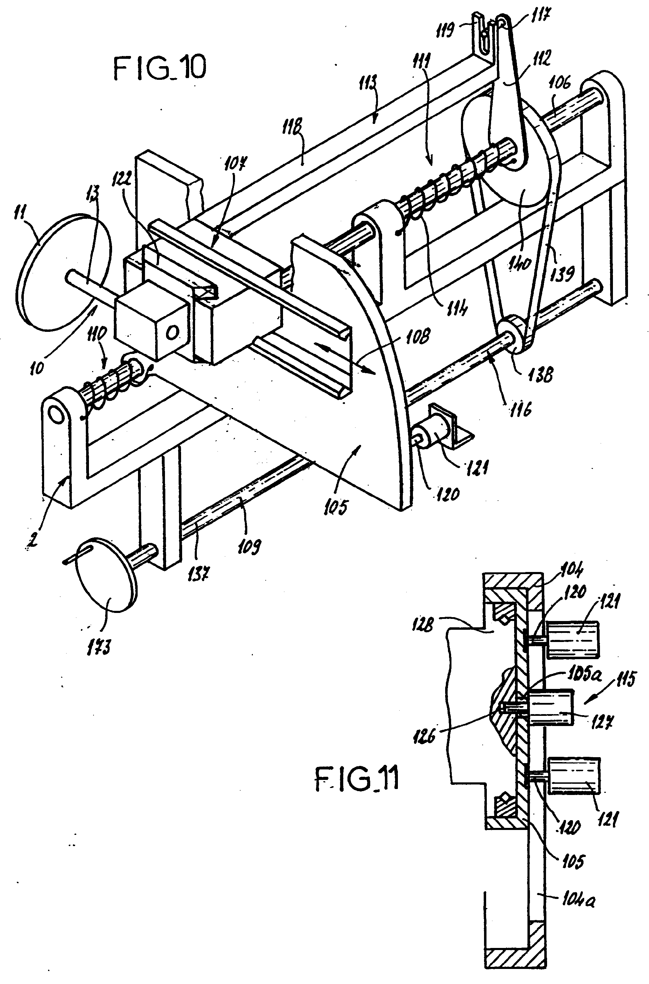

En outre, les moyens de commande 109 de l'équipage articulé en rotation sur l'axe 106 comportent un organe de commande du chariot 107 uniquement, permettant séparément de déplacer ce dernier et de pivoter le secteur 105 autour de l'axe 106, respectivement pour l'une et l'autre des deux fonctions d'arrêt décrites précédemment, choisies par le sélecteur 175. Cet organe de commande comprend un bras 112 monté perpendiculairement en rotation autour de l'axe d'orientation 106, une liaison cinématique 113 transformant la translation du chariot 107 en rotation du bras 112, ou inversement, et un mécanisme 116 d'actionnement en rotation du bras. Comme montré par la figure 10, la liaison cinématique 113 entre le chariot 107 et le bras 112 comprend un maneton 117 à l'extrémité libre dudit bras, une bielle 118 montée ou solidaire du chariot 107, s'étendant dans la direction de l'axe d'orientation 106, c'est-à-dire parallèlement à ce dernier, ainsi qu'une coulisse 119 disposée à l'extrémité libre de la bielle 118, engagée sur le maneton 117, et disposée perpendiculairement à la direction de translation 108. Le mécanisme d'actionnement 116 en rotation du bras comprend un arbre 137, monté en rotation sur le bâti 2, sur lequel sont câlés à une extrémité, un volant de commande 173, et de l'autre côté du secteur 105, une poulie 138 ; cette dernière entraîne en rotation, par une courroie 139, une roue 140 montée en rotation autour de l'axe 106, libre en translation par rapport à ce dernier sur une certaine plage, le bras 112 étant câlé et fixé en rotation sur la poulie 140.

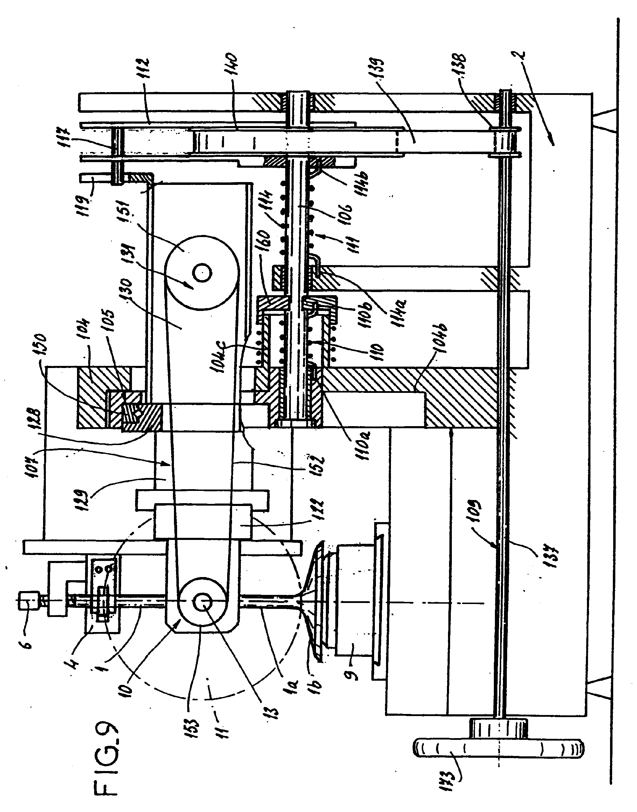

Comme mieux montré par la figure 9, le chariot 107 comporte une platine 128, montée mobile en translation selon la direction 108 sur le secteur 105, par l'intermédiaire de glissières 150 appropriées, avec d'un côté un support 129 du plateau 122, et donc de l'outil d'usinage 10, ce support étant constitué par deux montants parallèles avec glissières, et avec de l'autre côté, une structure porteuse 130, s'étendant à l'opposé du support 129, en traversant le panneau 104 du châssis 2, dans une ouverture appropriée de ce dernier. Un moyen 131 d'entraînement en rotation de l'outil d'usinage 11, dont l'axe de rotation 13 est parallèle à l'axe de translation 108 du chariot 107, comporte un moteur 151 supporté par la structure porteuse 130, entraînant l'arbre 13 par une courroie 152 et une poulie 153 câlée sur l'arbre 13.

Le système d'équilibrage des masses de l'équipage articulé autour de l'axe 106, comporte deux organes complémentaires de rappel, montrés schématiquement à la figure 10, et tels que réalisés à la figure 9.

Un premier organe 110 consiste et s'identifie avec un premier moyen de rappel en rotation, ou ressort de torsion, disposé selon l'axe d'orientation 106, entre le bâti 2 et le secteur d'orientation 105. Comme montré à la figure 9, ce ressort 110 comporte un brin mobile 110a câlé en rotation sur le secteur 105, et un brin fixe 110b, pris dans un bouchon 160, monté, de manière libre en translation mais fixe en rotation, sur un manchon 104c, disposé à l'arrière du panneau 104. Comme déjà dit, le ressort 110 est bandé ou chargé au départ, c'est-à-dire dans la position de repos de l'équipage montrée à la figure 8 ou 10, pour exercer un premier couple de rappel équilibrant au moins pour partie le couple d'entraînement par le poids dudit équipage.

Un deuxième organe 111 de rappel associe le bras 112 précédemment décrit, la liaison cinématique 113 précédemment décrite, et comporte un deuxième moyen de rappel 114 en rotation, ou ressort, disposé selon l'axe d'orientation 106, entre le bâti 2 et le bras perpendiculaire 112. Comme montré à la figure 9, le ressort 114 comporte un brin fixe 114a câlé en rotation sur le châssis 2, et un brin mobile 114b câlé sur la poulie 140, et donc le bras 112. Dans la position de repos de l'équipage montrée à la figure 10, le ressort de torsion se trouve en position neutre, c'est-à-dire n'est ni chargé, ni déchargé en torsion, et est disposé de manière à se charger sous l'effet du déplacement en translation du chariot 107, transmis par la liaison cinématique 113.

Au plan de son principe, et à partir de la représentation schématique selon la figure 10, l'action du système d'équilibrage des masses précédemment décrit, peut être expliquée comme suit.

La figure 10 représente le dispositif de positionnement au repos, c'est-à-dire dans une orientation horizontale du secteur 105 d'orientation et dans la position extrême axiale du chariot 107, c'est-à-dire proche de l'axe d'orientation 106. Dans cette position de repos, le centre de gravité au repos de l'équipage constitué par le secteur 105, le chariot 107, le plateau 122, l'outil d'usinage 11, et autres organes annexes, est proche de l'axe d'orientation 106.

Dans cette position de repos, comme déjà dit, le premier organe de rappel, s'identifiant au premier ressort de torsion 110, est bandé ou déjà chargé, pour exercer un premier couple de rappel, équilibrant pour partie, sinon pour la totalité, le couple d'entraînement vers le bas, du fait du poids de l'équipage s'exerçant sur son centre de gravité au repos. Comme déjà dit aussi, dans cette position de repos, le deuxième ressort de torsion 114 se trouve dans une position neutre, c'est-à-dire ni chargé ni déchargé en rotation.

En actionnant l'organe de blocage 115 dans sa fonction d'arrêt en translation du chariot 107, la tête 127 vient au contact du secteur 105 et arrête en translation le chariot 107, tandis que les deux têtes 121 sont à l'écart de la face adjacente du panneau 104, et libèrent le secteur 105 en rotation autour de l'axe 106, selon les positions relatives représentées à la figure 11. En agissant par le volant 173 sur le mécanisme 116 d'actionnement en rotation du bras 112, la rotation de ce dernier est transformée par la liaison cinématique 113 en une rotation du secteur 105 avec son chariot 107 ; on fait pivoter l'équipage précité vers le bas, en diminuant le couple d'entraînement sous l'effet du poids, au fur et à mesure de la rotation vers le bas de l'équipage, autour de l'axe 106. Simultanément, on débande ou décharge le ressort de torsion 110, en diminuant corrélativement le premier couple de rappel en rotation de l'équipage vers le haut, ce qui est en rapport avec la diminution du couple d'entraînement du fait du poids de l'équipage.

En actionnant l'organe de blocage 115 dans sa fonction d'arrêt en rotation du secteur 105, la tête 127 est dégagée du secteur 105 et libère en translation le chariot 106, tandis que les deux têtes 121 se bloquent contre la face adjacente du panneau 104, et arrêtent en rotation le secteur 105. En agissant sur le même mécanisme 116 d'actionnement, c'est-à-dire celui actionnant en rotation le bras 112, alors la rotation de ce dernier vers le bas est transformée par la liaison cinématique 113 en une translation du chariot 107 vers la périphérie du secteur 105 ; on déplace alors le chariot 107, le plateau 122 et la tête d'usinage 11 vers la périphérie du secteur 105, à l'écart de l'axe de rotation 106. Corrélativement, on déplace en translation, selon la direction 108 et vers la périphérie du secteur 105, le centre de gravité de l'équipage articulé en rotation sur l'axe 106. Ce déplacement du centre de gravité de l'équipage entraîne quant à lui, indépendamment de la rotation de l'équipage discutée précédemment, une augmentation du couple d'entraînement vers le bas, toutes choses égales par ailleurs, c'est-à-dire à poids égal de l'équipage.

Toujours sous l'effet du déplacement en translation du chariot 107 vers la périphérie du secteur 105, le ressort de torsion 114 se bande ou se charge en rotation, en exerçant un deuxième couple de rappel en rotation, distinct mais complétant le premier couple de rappel résultant du ressort de torsion 110. Le deuxième couple de rappel en rotation du ressort 14 augmente dans le sens du déplacement en translation du chariot 107, vers la périphérie du secteur 105. Ce deuxième couple se trouve appliqué sur l'équipage articulé autour de l'axe 106, par la liaison cinématique 113. De cette manière, le deuxième couple de rappel augmente au fur et à mesure de l'augmentation du couple d'entraînement par le poids de l'équipage, uniquement sous l'effet du déplacement en translation de son centre de gravité.

Au total, les deux composantes du déplacement du chariot 107, respectivement en rotation par le secteur 105 et en translation sur ce dernier, génèrent respectivement un couple d'entraînement vers le bas, diminuant avec la rotation, et un surcouple, toujours d'entraînement vers le bas, augmentant avec la translation. En correspondance, grâce aux moyens décrits précédemment, le couple d'entraînement se trouve compensé au départ par le couple de rappel en rotation du ressort 110, avec une diminution de ce dernier au fur et à mesure de la rotation de l'équipage. Le surcouple quant à lui se trouve compensé de manière complémentaire par le couple de rappel en rotation de ressort 114, avec une augmentation de ce dernier au fur et à mesure de la translation du chariot. Bien entendu, le tarage des ressorts de torsion 110 et 114 peut être choisi de manière à compenser par le ressort 110, la quasi-totalité du couple d'entraînement par le poids de l'équipage, et le surcouple pratiquement uniquement par le ressort 114. Mais le tarage des ressorts 110 et 114, l'un par rapport à l'autre, peut être tel que le ressort 114 se trouve contraint en torsion, pour partie sous l'action du poids de l'équipage, en plus de la torsion sous l'effet du surcouple discuté précédemment.

Conformément à la figure 12, la lunette de rotation 17 peut être obtenue sans galets de roulement, en prévoyant, comme représenté à la figure précitée, un berceau de reception 5 ayant un profil horizontal en "V", et pourvu de deux plaquettes ou patins 25 et 26 en carbure sur les deux côtés du "V" respectivement. Quant à la touche 15 d'appui en rotation, elle comporte, comme montré schématiquement aux figures 1 et 2, un galet presseur 54 monté sur une tête, laquelle est rappelée en translation vers la tige 1a de soupape par un ressort 40, agissant dans le plan vertical de référence 7, et perpendiculairement au référentiel rigide 14. Comme montré à cette même figure 12, la potence 22 présente un profil en queue d'arronde, sur lequel coulisse le support 4 ou 49, une vis 24 permettant de serrer ledit support sur la potence 22.

Conformément à la figure 13, le premier moyen de rappel en rotation 110 a été supprimé, et le second moyen de rappel en rotation 111 compense à lui tout seul, et le couple d'entraînement vers le bas généré par le poids de l'équipage, et le surcouple d'entraînement vers le bas généré par la translation du chariot sur le secteur d'orientation. Pour ce faire, le moyen de rappel 111 est constitué des éléments suivants, à savoir :
- un doigt 200 solidaire du bras 112 mobile en rotation, s'étendant perpendiculairement à l'extrémité de ce dernier, de l'autre côté par rapport à la liaison cinématique 113 ; ce doigt s'étend donc parallèlement à l'axe 106 horizontal, quelle que soit l'orientation angulaire du bras 112
- une pièce de liaison 202, ayant la forme d'une plaquette, disposée parallèlement au bâti 2, articulée à une extrémité autour d'un axe 203 disposé au voisinage de l'axe 116 et parallèle à l'axe 106 horizontal ; cette pièce de liaison articulée comporte une partie perpendiculaire, sur laquelle est montée une vis 204 de butée réglable contre le bâti 2
- un vérin de rappel 201, exerçant une poussée vers le haut, constante quel que soit l'enfoncement de sa tige dans son corps ; l'extrémité haute de ce vérin est articulée sur un axe 205 disposé dans le prolongement du doigt 200, et l'extrémité basse sur un axe 206 solidaire de la pièce de liaison 202, à distance de l'axe 203 ; la position de mise en tension du vérin 201 peut être réglée par la vis 204, dans la position de la pièce de liaison 202 l'amenant contre le bâti 2.

Conformément à la figure 13, la position de repos de l'équipage est différente de celle décrite précédemment, et est définie, d'une part par la position horizontale du secteur d'orientation 105, et d'autre part par la position du chariot 107 complètement à l'écart de l'axe 106, soit à droite selon la flèche 108 de la figure 13. A partir de cette position de repos, le secteur 105 demeurant en position horizontale, le déplacement du chariot 107 vers l'axe 106 déplace le doigt 200, et tire par le vérin 201 la pièce de liaison 202, laquelle tourne vers le haut autour de l'axe 203. Toujours à partir de la même position de repos que celle identifiée précédemment, le chariot 107 demeurant fixe en translation, la rotation vers le bas du secteur 105 ne modifie pas la position de la pièce de liaison 202, laquelle reste en appui contre le bâti 2 par la vis 204. Par contre, la direction d'application de la force de rappel du vérin 101 tourne autour de l'axe fixe 206, dans le sens anti-horaire, avec augmentation de sa composante tangentielle par rapport à l'axe 106, et donc augmentation du couple de rappel en rotation exercé par le moyen 111. Au total, pour toute position en translation du chariot 107, et toute position angulaire du secteur 105, le couple de rappel en rotation exercé par le vérin 201, agissant à partir du châssis 2 par l'intermédiaire de la pièce de liaison 107, est proportionné à l'action conjointe du couple et du surcouple d'entraînement définis précédemment.

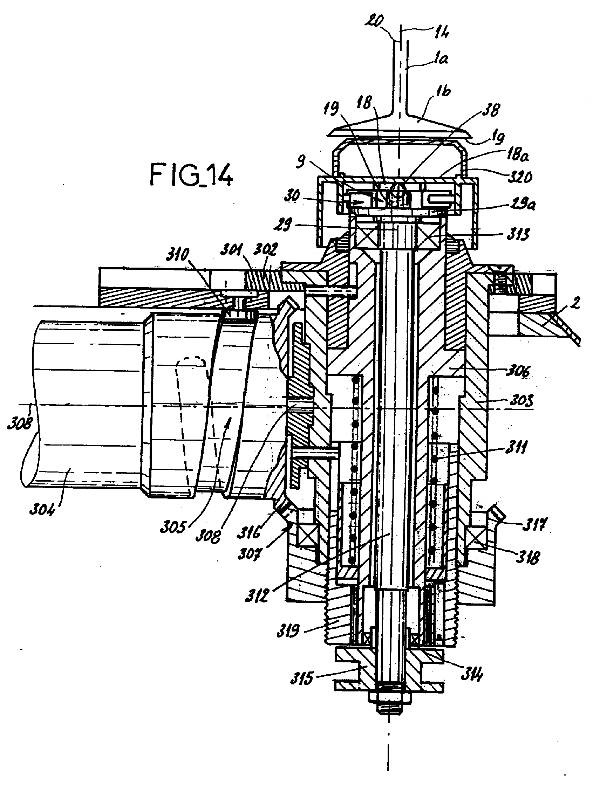

Conformément à la figure 14, on a représenté un organe de préréglage, d'une part en translation et horizontalement dans le plan vertical de référence 7, et d'autre part verticalement, en hauteur, toujours dans le même plan de référence 7, du groupe moteur en rotation de la soupape 1, ce dernier étant constitué par le moyen d'entraînement en rotation 9, les moyens 19 d'ajustement en rotation et le moyen d'orientation angulaire 38, précédemment décrits, et repérés par les mêmes références numériques.

Partant de l'observation que les tiges de soupape de hauteur relativement faible ont également un diamètre relativement faible, le dispositif de préréglage permet de monter le groupe moteur tout en le reculant, ou inversement de le baisser tout en l'avançant.

Ce dispositif de préréglage comprend:
- une glissière 301 solidaire du bâti 2, orientée dans le plan de référence 7, perpendiculairement au référentiel rigide 14 de la tige 1a de soupape
- une platine 302 coulissant sur la glissière, dans la direction de cette dernière
- un manchon tubulaire ou guide 303, supporté et monté au-dessous de la platine 302, allongé perpendiculairement à cette dernière
- un arbre 304 de commande en préréglage, monté libre en rotation, par un roulement non représenté, sur le manchon 303, autour d'un axe 308 solidaire de ce dernier, orienté dans le plan de référence 7, c'est-à-dire celui de la figure 14, perpendiculairement au référentiel rigide vertical 14
- un moyen 305 transformant la rotation de l'arbre 304 en translation de la platine 302 par rapport à la glissière 301 ; ce moyen consiste en une rampe hélicoïdale 309 coopérant avec un pion 310 solidaire du bâti 2
- un noyau cylindrique ou fourreau 306 monté sur et à l'intérieur du guide 303, déplaçable en translation selon la hauteur de ce dernier, rappelé vers le haut par un ressort 311 ; ce fourreau supporte le groupe moteur précédemment défini, grâce à un axe 312 tourillonné sur ledit fourreau par deux roulements 313 et 314 disposés à ses deux extrémités respectivement ; l'extrémité basse de l'axe 312, extérieure au manchon 303 est calée en rotation sur une poulie d'entraînement 315
- un moyen 307 transformant la rotation de l'arbre 304 en translation du fourreau 306 par rapport au guide 303 ; ce moyen comporte un pignon 316 solidaire de l'extrémité interne de l'arbre 304, un autre pignon 317 disposé en angle droit, libre en rotation par rapport au manchon 303 grâce à un roulement 318, et une pièce 319 filetée coopérant avec un filetage complémentaire sur le pignon 317 ; c'est cette pièce 319 qui forme une butée réglable pour l'autre extrémité du ressort 311.

Par ailleurs, une cale 320 est disposée entre la face avant 1g de la soupape et le disque 18a du moyen 19 d'ajustement en rotation.

S'agissant de l'organe 18 rotatif menant d'accouplement en rotation avec la tête 1b de soupape, celui-ci peut être un organe de serrage comprenant trois mors à 120° les uns des autres, déplaçables chacun entre une position éloignée libérant la tête de soupape, et une position rapprochée appuyant sur le chant de cette même tête. De la même manière que précédemment, l'usinage peut être effectué sur la face arrière 1f de la tête de soupape 1a.

Avec un dispositif de rectification tel que précédemment décrit, il devient possible d'abaisser l'écart de concentricité entre la partie rectifiée et l'axe de la soupape, au-dessous de 2/100 mm.

## Revendications

1. Dispositif de rectification de la tête (1b) d'une soupape (1), ladite soupape comprenant une tige (1a) avec une queue (1c) opposée à ladite tête, ce dispositif comprenant :
- un bâti rigide (2)
- un moyen (3) de soutien en rotation de la tige, monté sur le bâti, comprenant au moins deux supports (4,49) alignés selon une direction de référence, disposés à distance l'un de l'autre, comportant chacun d'une part un berceau (5) de réception en rotation d'une zone d'appui intercalaire (1d,1e) de la tige de soupape, dont l'ouverture croît en largeur vers l'extérieur, de part et d'autre d'un plan (7) de référence et de symétrie, parallèle à ou passant par la direction de référence, et d'autre part une " touche mobile (15,16) d'appui en rotation, disposée en regard du berceau (5) de réception, et formant avec ce dernier une lunette (17) de rotation d'une zone tourillonnée (1d,1e) intercalaire de la tige (1a) de soupape
- une butée (8) d'appui en rotation contre la queue (1c) de soupape, dirigée selon la direction de référence
- un moyen d'entraînement (9) en rotation de la soupape, disposé du côté opposé au moyen (3) de soutien en rotation, comprenant un organe (18) rotatif menant d'accouplement en rotation avec la tête (1b) de soupape, par sa face avant (1g) opposée à la face arrière (1f) à usiner
- des moyens (19) d'ajustement en rotation, pour compenser le mésalignement entre l'axe de rotation (20) de l'organe rotatif menant et l'axe de rotation (14) rigide de la tige (1a) de soupape
- un poste (10) d'usinage, monté sur le bâti (2) en relation angulaire avec le moyen de soutien en rotation, comprenant un outil (11) d'usinage de la tête de soupape, par sa face arrière (1f) adjacente à la tige (1a), et un moyen (12) d'entraînement en rotation de l'outil d'usinage, autour d'un axe d'usinage (13)
**caractérisé en ce que** le moyen (3) de soutien en rotation de la tige (1b) de soupape est disposé fixement et verticalement sur le bâti, pour établir un référentiel fixe et vertical de l'axe (14,14') de rotation de la tige de soupape, dans un plan vertical (7) de référence, le moyen d'entraînement (9) en rotation de la soupape est disposé verticalement, au-dessous du moyen (3) de soutien en rotation, tandis que le poste (10) d'usinage est monté sur le bâti (2) de manière orientable autour d'un axe horizontal, pour régler l'axe d'usinage (13) par rapport au référentiel (14,14') fixe et vertical de la tige (1a) de soupape.

2. Dispositif selon la revendication 1, caractérisé en ce que l'organe (18) rotatif menant étant monté mobile en translation sur le bâti (2), des moyens d'ajustement en rotation comprennent, d'une part un organe de mesure de la position de l'axe rigide (14) de rotation de la tige (1a) de soupape, dans le plan de référence (7), et d'autre part un organe de correction de la position de l'organe (18) rotatif menant, dans le plan de référence (7), agissant à proportion de la mesure faîte par l'organe de mesure.

3. Dispositif selon la revendication 1, selon lequel l'organe rotatif menant (18) peut être déplacé en translation, pour aligner en fonctionnement l'axe moteur (20) de rotation avec l'axe de rotation (14) rigide de la soupape, et selon lequel l'organe rotatif menant (18) est attaqué par un arbre tournant (29), avec un organe d'accouplement (30) disposé entre ce dernier et l'organe rotatif menant, et permettant de compenser tout mésalignement entre l'axe de rotation rigide (14) et l'arbre tournant (29), caractérisé en ce que l'organe (18) rotatif menant et l'arbre tournant (29) sont solidaires en rotation respectivement de deux plaques (18a,29a) cylindriques en vis-à-vis, en appui l'une contre l'autre par l'intermédiaire de l'organe (30) d'accouplement, et en ce qu'au-dessus et au-dessous de l'organe d'accouplement sont agencées respectivement deux glissières (32,33) de jeu axial, respectivement à angle droit, chaque glissière étant obtenue par la coopération d'une partie mâle (34) prévue sur l'organe d'accouplement (30), et une partie femelle (35) prévue sur une plaque ( 18a,29a), ou inversement.

4. Dispositif selon la revendication 3, caractérisé en ce que l'organe rotatif menant (18) à la forme d'une cloche coiffant l'arbre tournant (29), ayant la forme d'une plaque, et l'organe d'accouplement comprend au moins deux rondelles (36,37) solidarisées l'une au-dessus de l'autre.

5. Dispositif selon la revendication 4, caractérisé en ce que chaque glissière (32,33) est obtenue par deux axes (34) montés sur l'organe d'accouplement (30), à 180° par rapport à l'axe de l'organe rotatif (18) menant ou de l'arbre tournant (29), et par deux rainures (35), prévues respectivement en vis-à-vis des deux axes respectivement, obtenues sur une plaque cylindrique (18a,29a), à 180° l'une de l'autre par rapport à l'axe de l'organe rotatif (18) menant ou de l'arbre tournant (29).

6. Dispositif selon la revendication 3, selon lequel un moyen d'orientation angulaire (38) de l'organe rotatif (18) menant, par rapport à l'axe rigide (14) de rotation de la tige (1a) de soupape, est prévu pour compenser tout défaut de perpendicularité de la face avant (1g) de la tête de soupape (1b) par rapport au même axe rigide (14), caractérisé en ce que le moyen d'orientation angulaire (38) est une rotule disposée entre l'arbre tournant (29) et l'organe rotatif menant (18), sensiblement en leurs centres.

7. Dispositif selon la revendication 1, caractérisé en ce que pour orienter et déplacer le poste d'usinage (10), par rapport au référentiel fixe et vertical de la tige (1a) de soupape, le bâti comporte un panneau (104) vertical, un secteur (105) d'orientation, d'extension parallèle au panneau, est monté mobile en rotation sur le bâti (2) autour d'un axe (106) d'orientation horizontal, un chariot (128) est monté mobile en translation sur le secteur d'orientation, selon un axe (108) de translation orthogonal à l'axe d'orientation (106), et le poste d'usinage (10) est monté sur le chariot.

8. Dispositif selon la revendication 7, caractérisé en ce que des moyens de commande du secteur en orientation et du chariot en translation comportent en combinaison, d'une part un organe de blocage ( 115) ayant au moins deux fonctions, l'une d'arrêt en translation du chariot (107), dans laquelle le secteur (105) d'orientation demeure libre en rotation, et l'autre d'arrêt en rotation du secteur, dans laquelle le chariot demeure libre en translation, et d'autre part un organe (109) de commande du chariot uniquement, comportant un bras (112) monté perpendiculairement en rotation autour de l'axe d'orientation (106), une liaison cinématique (113) transformant la translation du chariot en rotation du bras, ou inversement, et un mécanisme (116) d'actionnement en rotation du bras.

9. Dispositif selon la revendication 8, caractérisé en ce que le panneau (104) comporte une glissière de guidage (104a), ayant la forme d'un arc de cercle centré sur l'axe d'orientation (106), et le secteur d'orientation (105) comporte deux tétons (120) traversant la glissière, disposés de part et d'autre du secteur, selon le chemin circulaire déterminé par la glissière.

10. Dispositif selon la revendication 9, caractérisé en ce que les deux tétons (120) comportent chacun une tête (121) de blocage, disposée de l'autre côté du panneau (104) par rapport au secteur (105), déplaçable selon la hauteur d'un dit téton, pour venir au contact de la face opposée dudit panneau, et arrêter ainsi en rotation ledit secteur.

11. Dispositif selon la revendication 7, caractérisé en ce qu'un plateau (122) est monté mobile en translation sur le chariot (107), perpendiculairement à la direction de translation dudit chariot, et le poste d'usinage est solidaire dudit plateau.

12. Dispositif selon la revendication 7, caractérisé en ce que le secteur d'orientation (105) comporte une lumière de guidage (105a), ayant la forme d'une droite parallèle à la direction de translation (108) du chariot (107), le chariot (107) comporte un téton (126) traversant la lumière, et une tête (127) de blocage est déplaçable selon la hauteur dudit téton, de l'autre côté du secteur, pour venir au contact de la surface de ce dernier, et arrêter ainsi en translation le chariot.

13. Dispositif selon la revendication 7, caractérisé en ce que le chariot (107) comporte une platine (128) mobile selon la direction de translation (108) sur le secteur (105), un support (129) de l'outil d'usinage d'un côté du secteur, une structure porteuse (130), s'étendant du côté opposé audit secteur, en traversant le panneau (104).

14. Dispositif selon la revendication 13, caractérisé en ce qu'un moyen d'entraînement en rotation de l'outil d'usinage (11) est embarqué dans la structure porteuse (130).

15. Dispositif selon la revendication 8, caractérisé en ce qu'un système d'équilibrage des masses coopère avec l'équipage composé au moins par le secteur (105) d'orientation, le chariot (128) et le poste d'usinage (10), et comporte au moins un moyen de rappel (111) en rotation, autour de l'axe (106) horizontal d'orientation, entre le bâti fixe (2) et le bras (112) mobile en rotation de l'organe (109) de commande du chariot, ledit moyen de rappel compensant au moins pour partie le surcouple d'entraînement vers le bas généré par la translation du chariot sur le secteur d'orientation

16. Dispositif selon la revendication 15, caractérisé en ce que le système d'équilibrage des masses comprend un autre moyen de rappel(110) en rotation, autour de l'axe (106) horizontal d'orientation, entre le bâti fixe (2) et le secteur (105) d'orientation, bandé ou chargé dans la position de repos de l'équipage, et compensant au moins pour partie le couple d'entraînement vers le bas généré par le poids dudit équipage.

17. Dispositif selon la revendication 15, caractérisé en ce que le système d'équilibrage des masses comprend un seul moyen de rappel (111) en rotation, compensant et le couple d'entraînement vers le bas généré par le poids de l'équipage, et le surcouple d'entraînement généré par la translation du chariot sur le secteur d'orientation.

18. Dispositif selon la revendication 1, caractérisé en ce qu'il comprend un organe de préréglage en translation et en hauteur dans le plan vertical (7) de référence, du groupe moteur comprenant le moyen (9) d'entraînement en rotation et les moyens (19) d'ajustement en rotation, le dispositif de préréglage comprenant :
- une glissière (301) solidaire du bâti (2), orientée dans le plan de référence (7), perpendiculairement au référentiel rigide vertical (14) de la tige (1a) de soupape
- une platine (302) coulissant sur la glissière
- un guide (303) supporté et monté au-dessous de la platine, allongé perpendiculairement à cette dernière
- un arbre (304) de commande en préréglage, monté libre en rotation sur le manchon (303), autour d'un axe orienté dans le plan de référence perpendiculairement au référentiel rigide vertical (14)
- un moyen (305) transformant la rotation de l'arbre (304) en translation de la platine (302) par rapport à la glissière (301)
- un fourreau (306) monté sur le guide (303), déplaçable selon la hauteur de ce dernier, supportant le groupe moteur
- un moyen (307) transformant la rotation de l'arbre (304) en translation du fourreau (306) par rapport au guide (303).

## Claims

1. Device for grinding the head (1b) of a valve (1), the said valve comprising a stem (1a) with a tail (1c) opposite the said head, this device comprising:
- a rigid stand (2),
- a means (3) for supporting the stem in terms of rotation, mounted on the stand and comprising at least two supports (4, 49) aligned in a reference direction, arranged at a distance from one another and each comprising, on the one hand, a cradle (5) for receiving in terms of rotation an intermediate bearing zone (1d, 1e) of the valve stem, the aperture of which increases in width outwards on either side of a reference plane (7) of symmetry parallel to or passing via the reference direction, and, on the other hand, a movable fence (15, 16) for rotational bearing, arranged opposite the receiving cradle (5) and forming with the latter a rotary stay (17) for an intermediate pivoted zone (1d, 1e) of the valve stem (1a),
- a stop (8) for rotational bearing against the valve tail (1c) and pointing in the reference direction,
- a means (9) for driving the valve in rotation, arranged on the opposite side to the means (3) for supporting in terms of rotation and comprising a rotary driving member (18) for rotational coupling with the valve head (1b) on its front face (1g) opposite the rear face (1f) to be machined,
- means (19) for rotational adjustment, to compensate the misalignment between the axis of rotation (20) of the rotary driving member and the rigid axis of rotation (14) of the valve stem (1a),
- a machining station (10) mounted on the stand (2) in angular relationship with the means for supporting in terms of rotation and comprising a tool (11) for machining the valve head on its rear face (1f) adjacent to the stem (1a) and a means (12) for driving the machining tool in rotation about a machining axis (13),
characterised in that the means (3) for supporting the valve stem (1b) in terms of rotation is arranged fixedly and vertically on the stand, to provide a fixed and vertical reference system for the axis of rotation (14, 14') of the valve stem in a vertical reference plane (7), and the means (9) for driving the valve in rotation is arranged vertically, below the means (3) for supporting in terms of rotation, whilst the machining station (10) is mounted on the stand (2) in an orientable manner about a horizontal axis in order to adjust the machining axis (13) in relation to the fixed and vertical reference system (14, 14') of the valve stem (1a).

2. Device according to Claim 1, characterised in that, with the rotary driving member (18) mounted movably in terms of translational motion on the stand (2), means of rotational adjustment comprise, on the one hand, a member for measuring the position of the rigid axis of rotation (14) of the valve stem (1a) in the reference plane (7) and, on the other hand, a member for correcting the position of the rotary driving member (18) in the reference plane (7), acting proportionately to the measurement made by the measuring member.

3. Device according to Claim 1, in which the rotary driving member (18) can be displaced in translational movement in order, during operation, to align the driving axis of rotation (20) with the rigid axis of rotation (14) of the valve, and in which the rotary driving member (18) is engaged by a rotary shaft (29) with a coupling member (30) arranged between the latter and the rotary driving member and making it possible to compensate any misalignment between the rigid axis of rotation (14) and the rotary shaft (29), characterised in that the rotary driving member (18) and rotary shaft (29) are fixed respectively in terms of rotation to two mutually confronting cylindrical plates (18a, 29a) bearing against one another by means of the coupling member (30), and in that arranged respectively above and below the coupling member are two slideways (32, 33) with axial play, respectively at right angles, each slideway being obtained by the cooperation of a male part (34) provided on the coupling member (30) and a female part (35) provided on a plate (18a, 29a), or vice versa.

4. Device according to Claim 3, characterised in that the rotary driving member (18) has the form of a bell covering the rotary shaft (29) having the form of a plate, and the coupling member comprises at least two washers (36, 37) mutually fixed one above the other.

5. Device according to Claim 4, characterised in that each slideway (32, 33) is obtained by means of two pins (34) mounted on the coupling member (30) at 180° relative to the axis of the rotary driving member (18) or of the rotary shaft (29) and by two grooves (35) provided respectively opposite the two pins and obtained on a cylindrical plate (18a, 29a) at 180° relative to one another in relation to the axis of the rotary driving member (18) or of the rotary shaft (29).

6. Device according to Claim 3, in which a means (38) of angular orientation of the rotary driving member (18) in relation to the rigid axis of rotation (14) of the valve stem (1a) is provided for compensating any defect of perpendicularity of the front face (1g) of the valve head (1b) in relation to the same rigid axis (14), characterised in that the means (38) of angular orientation is a ball arranged between the rotary shaft (29) and the rotary driving member (18) substantially at their centres.

7. Device according to Claim 1, characterised in that, to orient and displace the machining station (10) in relation to the fixed and vertical reference system of the valve stem (1a), the stand possesses a vertical panel (104), an orientation quadrant (105) of an extension parallel to the panel is mounted movably in terms of rotation on the stand (2) about a horizontal axis of orientation (106), a carriage (128) is mounted movably in terms of translational motion on the orientation quadrant along an axis (108) of translational movement orthogonal to the axis of orientation (106), and the machining station (10) is mounted on the carriage.

8. Device according to Claim 7, characterised in that means for controlling the orientation of the quadrant and the translational movement of the carriage comprise in combination, on the one hand, a blocking member (115) having at least two functions, one to stop the translational movement of the carriage (107), in which the orientation quadrant (105) remains free in terms of rotation, and the other to stop the rotation of the quadrant, in which the carriage remains free in terms of translational movement, and, on the other hand, a member (109) for controlling the carriage alone, comprising an arm (112) mounted perpendicularly in terms of rotation about the axis of orientation (106), a kinematic connection (113) converting the translational movement of the carriage into a rotation of the arm, or vice versa, and a mechanism (118) for actuating the arm in rotation.

9. Device according to Claim 8, characterised in that the panel (104) has a guide slideway (104a) in the form of an arc of a circle centred on the axis of orientation (106), and the orientation quadrant (105) possesses two studs (120) passing through the slideway and arranged on either side of the quadrant along the circular path determined by the slideway.

10. Device according to Claim 9, characterised in that the two studs (120) each comprise a blocking head (121) arranged on the other side of the panel (104) in relation to the quadrant (105) and displaceable over the height of a said stud in order to come into contact with the opposite face of the said panel and thus stop the rotation of the said quadrant.

11. Device according to Claim 7, characterised in that a plate (122) is mounted movably in terms of translational motion on the carriage (107) perpendicularly to the direction of translational movement of the said carriage, and the machining station is fixed to the said plate.

12. Device according to Claim 7, characterised in that the orientation quadrant (105) has a guide slot (105a) in the form of a straight line parallel to the direction of translational movement (108) of the carriage (107), the carriage (107) has a stud (126) passing through the slot, and a blocking head (127) is displaceable over the height of the said stud on the other side of the quadrant in order to come into contact with the surface of the latter and thus stop the translational movement of the carriage.

13. Device according to Claim 7, characterised in that the carriage (107) has a stage (128) movable in the direction of translational movement (108) on the quadrant (105), a support (129) for the machining tool on one side of the quadrant, and a carrier structure (130) extending on the opposite side to the said quadrant and passing through the panel (104).

14. Device according to Claim 13, characterised in that a means for driving the machining tool (11) in rotation is mounted in the carrier structure (130).

15. Device according to Claim 8, characterised in that a mass-balancing system cooperates with the outfit composed at least of the orientation quadrant (105), the carriage (128) and the machining station (10) and comprises at least one rotational return means (111) about the horizontal axis of orientation (106) between the stationary stand (2) and the rotationally movable arm (112) of the carriage control member (109), the said return means at least partially compensating the excess downward driving torque generated as a result of the translational movement of the carriage on the orientation quadrant.

16. Device according to Claim 15, characterised in that the mass-balancing system comprises another rotational return means (110) about the horizontal axis of orientation (106) between the stationary stand (2) and the orientation quadrant (105), tensioned or loaded in the position of rest of the outfit and at least partially compensating the downward driving torque generated by the weight of the said outfit.

17. Device according to Claim 15, characterised in that the mass-balancing system comprises a single rotational return means (111) compensating both the downward driving torque generated by the weight of the outfit and the excess driving torque generated as a result of the translational movement of the carriage on the orientation quadrant.

18. Device according to Claim 1, characterised in that it comprises a member for preadjusting, in terms of translational movement and height in the vertical reference plane (7), the drive unit comprising the means (9) for driving in rotation and the means (19) for adjustment of rotation, the preadjustment device comprising:
- a slideway (301) fixed to the stand (2) and oriented in the reference plane (7) perpendicularly to the vertical rigid reference system (14) of the valve stem (1a),
- a plate (302) sliding on the slideway,
- a guide (303) supported and mounted beneath the plate and elongate perpendicularly to the latter,
- a preadjustment control shaft (304) mounted freely rotatably on the sleeve (303) about an axis oriented in the reference plane perpendicularly to the vertical rigid reference system (14),
- a means (305) converting the rotation of the shaft (304) into a translational movement of the plate (302) relative to the slideway (301),
- a bush (306) mounted on the guide (30), displaceable over the height of the latter and supporting the drive unit, and
- a means (307) converting the rotation of the shaft (304) into a translational movement of the bush (306) relative to the guide (303).

## Patentansprüche

1. Vorrichtung zum Schleifen des Tellers (1b) eines Ventiles (1), wobei das Ventil eine Spindel (1a) mit einer zu dem Teller entgegengesetzt gelegenen Stange (1c) umfaßt, wobei die Vorrichtung umfaßt:
- ein starres Gestell (2),
- eine auf dem Gestell montierte Einrichtung (3) zur drehbaren Halterung der Spindel, mit wenigstens zwei Trägern (4, 49), die längs einer Referenzrichtung ausgerichtet und in einem Abstand übereinander angeordnet sind und von denen jeder einerseits zur drehbaren Aufnahme einer zwischenliegenden Haltezone (1d, 1e) der Spindel des Ventiles eine Wiege (5) umfaßt, deren Öffnung nach außen beidseits einer Referenz- und Symmetrieebene (7) an Größe zunimmt, die parallel zu der Referenzrichtung ist oder diese passiert, und andererseits eine bewegliche Backe (15, 16) zur drehbaren Halterung umfaßt, welche der Aufnahmewiege (5) gegenüberstehend angeordnet ist und mit der letzteren einen Drehhalter für eine zwischenliegende Drehzone (1d, 1e) der Spindel (1a) des Ventiles bildet,
- ein längs der Referenzrichtung gerichtetes Widerlager (8) für die Stange (1c) des Ventiles zur drehbaren Halterung,
- eine Einrichtung (9) zum Drehantrieb des Ventiles, welche an der zu der Einrichtung (3) zur drehbaren Halterung entgegengesetzten Seite angeordnet ist und ein Drehantriebsorgan (18) zur Drehkupplung mit dem Teller (1b) des Ventiles über seine vordere Seite (1g) umfaßt, welche von der zu bearbeitenden rückwärtigen Seite (1f) abgelegen ist,
- Dreheinstellmittel (19) zum Kompensieren der Fehlausrichtung zwischen der Drehachse (20) des Drehantriebsorganes und der festen Drehachse (14) der Spindel (1a) des Ventiles,
- einen Bearbeitungsstand (10), der auf dem Gestell (2) unter einem Winkel zu der Einrichtung zur drehbaren Halterung montiert ist und ein Werkzeug (11) zur Bearbeitung des Ventiltellers an seiner der Spindel (1a) benachbarten, rückwärtigen Seite (1f) sowie eine Einrichtung (12) zum Drehantrieb des Bearbeitungswerkzeuges um eine Bearbeitungsachse (13) umfaßt,
dadurch gekennzeichnet, daß die Einrichtung (3) zur drehbaren Halterung der Spindel (1b) des Ventiles fest und vertikal auf dem Gestell angeordnet ist, um ein festes und vertikales Bezugssystem für die Drehachse (14, 14') der Spindel des Ventiles in einer vertikalen Referenzebene (7) zu etablieren, die Einrichtung (9) zum Drehantrieb des Ventiles vertikal unterhalb der Einrichtung (3) zur drehbaren Halterung angeordnet ist, sowie daß der Bearbeitungsstand (10) auf dem Gestell (2) auf eine um eine horizontale Achse ausrichtbare Weise montiert ist, um die Bearbeitungsachse (13) bezogen auf das feste und vertikale Bezugssystem (14, 14') der Spindel (1a) des Ventiles einzustellen.

2. Vorrichtung nach Anspruch 1, dadurch gekennzeichnet, daß während das Drehantriebsorgan (18) translationsbeweglich auf dem Gestell (2) montiert ist, die Dreheinstellmittel einerseits ein Meßorgan für die Position der festen Drehachse (14) der Spindel (1a) des Ventiles in der Referenzebene (7) umfassen und andererseits ein Korrekturorgan für die Position des Drehantriebsorganes (18) in der Referenzebene (7) aufweisen, das entsprechend der von dem Meßorgan durchgeführten Messung wirkt.

3. Vorrichtung nach Anspruch 1, bei der das Drehantriebsorgan (18) in Translationsrichtung verschoben werden kann, um im Betrieb die Motordrehachse (20) mit der festen Drehachse (14) des Ventiles auszurichten, und bei der das Drehantriebsorgan (18) durch eine Drehwelle (29) angetrieben ist, wobei ein Kupplungsorgan (30) zwischen dem letzteren und dem Drehantriebsorgan angeordnet ist und es ermöglicht, jede Fehlausrichtung zwischen der festen Drehachse (14) und der Drehwelle (29) zu kompensieren, dadurch gekennzeichnet, daß das Drehantriebsorgan (18) und die Drehwelle (29) jeweils drehfest mit zwei einander gegenüberliegenden zylindrischen Scheiben (18a, 29a) fest verbunden sind, welche sich mittels des Kupplungsorganes (30) aufeinander abstützen, und dadurch, daß oberhalb und unterhalb des Kupplungsorganes zwei Führungen (32, 33) mit axialem Spiel jeweils unter einem rechten Winkel angeordnet sind, wobei jede Führung durch das Zusammenwirken eines an dem Kupplungsorgan (30) vorgesehenen männlichen Teiles (34) und eines in einer Scheibe (18a, 29a) vorgesehenen weiblichen Teiles (35) oder umgekehrt erzeugt sind.

4. Vorrichtung nach Anspruch 3, dadurch gekennzeichnet, daß das Drehantriebsorgan (18) die Form einer Glocke aufweist, welche die die Form einer Scheibe aufweisende Drehwelle (29) übergreift, und daß das Kupplungsorgan wenigstens zwei übereinander befestigte Unterlegscheiben umfaßt.

5. Vorrichtung nach Anspruch 4, dadurch gekennzeichnet, daß jede Führung (32, 33) durch zwei Achsen (34), welche an dem Kupplungsorgan (30) unter 180° bezogen auf die Achse des Drehantriebsorganes (18) oder der Drehwelle (29) montiert sind, und durch zwei Nuten (35) erhalten ist, welche jeweils gegenüber der beiden jeweiligen Achsen angeordnet sind und auf einer zylindrischen Scheibe (18a, 29a) unter 180° zueinander bezogen auf die Achse des Drehantriebsorganes (18) oder der Drehwelle (29) erhalten werden.

6. Vorrichtung nach Anspruch 3, bei welcher eine Einrichtung (38) zur Winkelausrichtung des Drehantriebsorganes (18) bezogen auf die feste Drehachse (14) der Spindel (1a) des Ventiles vorgesehen ist, um jeden Fehler in der senkrechten Ausrichtung der vorderen Seite (1g) des Ventiltellers (1b) bezogen auf die selbe steife Achse (14) zu kompensieren, dadurch gekennzeichnet, daß die Einrichtung (38) zur Winkelausrichtung ein Kugelgelenk ist, das zwischen der Drehwelle (29) und dem Drehantriebsorgan (18) im wesentlichen in ihren Zentren angeordnet ist.

7. Vorrichtung nach Anspruch 1, dadurch gekennzeichnet, daß zum Ausrichten und Verschieben des Bearbeitungsstandes (10) bezogen auf das feste und vertikale Bezugssystem der Spindel (1a) des Ventiles das Gestell eine vertikale Tafel (104) trägt, ein sektorartiges Ausrichtteil (105) mit paralleler Ausdehnung zu der Tafel drehbweglich an dem Gestell (2) um eine horizontale Ausrichtachse (106) montiert ist, ein Wagen (128) an dem sektorartigen Ausrichtteil längs einer zu der Ausrichtachse (106) orthogonalen Translationsachse (108) translationsbeweglich montiert ist, und daß der Bearbeitungsstand (10) auf dem Wagen montiert ist.

8. Vorrichtung nach Anspruch 7, dadurch gekennzeichnet, daß Mittel zum Steuern des sektorartigen Ausrichtteiles und der Translation des Wagens in Kombination einerseits ein Blockierorgan (115) mit wenigstens zwei Funktionen umfassen, eine zur Arretierung der Translationsbewegung des Wagens, in welcher das sektorartige Ausrichtteil (105) zur Drehung frei bleibt, und eine weitere zur Arretierung der Drehung des Sektors, in welcher der Wagen im Sinne einer Translationsbewegung frei bleibt, und andererseits ein besonderes Steuerorgan (109) für den Wagen umfassen, das einen zur Drehung um die Ausrichtachse (106) senkrecht montierten Ausleger (112), eine die Translation des Wagens in eine Rotation des Auslegers oder umgekehrt umwandelnde kinematische Verbindung (113) sowie einen Antriebsmechanismus (116) zur Drehung des Auslegers aufweist.

9. Vorrichtung nach Anspruch 8, dadurch gekennzeichnet, daß die Tafel (104) eine Gleitführung (104a) in Form eines zu der Ausrichtachse (106) zentrierten Kreisbogens umfaßt, und daß das sektorartige Ausrichtteil (105) zwei durch die Führung hindurchgehende Ansätze (120) umfaßt, welche beidseits des Sektors längs der durch die Führung bestimmten Kreisbahn angeordnet sind.

10. Vorrichtung nach Anspruch 9, dadurch gekennzeichnet, daß die beiden Ansätze (120) jeweils einen Blockierkopf (121) umfassen, der an der anderen Seite der Tafel (104) bezogen auf den Sektor (105) angeordnet und längs der Höhe eines besagten Ansatzes verschiebbar ist, um mit der gegenüberliegenden Seite der Tafel in Kontakt zu gelangen und so den Sektor bezüglich der Drehung zu arretieren.

11. Vorrichtung nach Anspruch 7, dadurch gekennzeichnet, daß eine Platte (122) senkrecht zu der Translationsrichtung des Wagens translationsbeweglich an dem Wagen (107) befestigt ist, und daß der Bearbeitungsstand mit dieser Platte fest verbunden ist.

12. Vorrichtung nach Anspruch 7, dadurch gekennzeichnet, daß das sektorartige Ausrichtteil (105) einen Führungsschlitz (105a) in Form einer Geraden parallel zu der Translationsrichtung (108) des Wagens (107) umfaßt, daß der Wagen (107) einen durch die Führung hindurchgehenden Ansatz (126) umfaßt, und daß ein Blockierkopf (127) längs der Höhe dieses Ansatzes auf der anderen Seite des Sektors verschiebbar ist, um in Kontakt mit der Fläche des letzteren zu gelangen und so den Wagen bezüglich der Translationsbewegung zu arretieren.

13. Vorrichtung nach Anspruch 7, dadurch gekennzeichnet, daß der Wagen (107) eine längs der Richtung der Translationsbewegung (108) an dem Sektor (105) bewegliche Platine (128), einen Träger (129) für das Bearbeitungswerkzeug an einer Seite des Sektors sowie eine Tragestruktur (130) umfaßt, die sich an der von dem Sektor abgelegenen Seite erstreckt, wobei sie durch die Tafel (104) hindurchgeht.

14. Vorrichtung nach Anspruch 13, dadurch gekennzeichnet, daß eine Einrichtung zum Drehantrieb des Bearbeitungswerkzeuges (11) von der Tragestruktur (130) mitgenommen wird.

15. Vorrichtung nach Anspruch 8, dadurch gekennzeichnet, daß ein System zum Massenausgleich mit dem beweglichen Organ kooperiert, das wenigstens aus dem sektorartigen Ausrichtteil (105), dem Wagen (128) und dem Bearbeitungsstand (10) gebildet ist, und wenigstens ein Rückholorgan (111) im Sinne einer Drehbewegung um die horizontale Ausrichtachse (106) umfaßt, das zwischen dem festen Gestell (2) und dem rotationsbeweglichen Ausleger (112) des Steuerorganes (106) des Wagens angeordnet ist, wobei das Rückholorgan wenigstens teilweise das zusätzliche Antriebsmoment nach unten kompensiert, das durch die Translationsbewegung des Wagens an dem sektorartigen Ausrichtteil erzeugt wird.

16. Vorrichtung nach Anspruch 15, dadurch gekennzeichnet, daß das System zum Massenausgleich wenigstens ein weiteres Rückholorgan (110) im Sinne einer Drehbewegung um die horizontale Ausrichtachse (106) umfaßt, das zwischen dem festen Gestell (2) und dem sektorartigen Ausrichtteil (105) angeordnet und in der Ruhestellung des beweglichen Organes gespannt oder geladen ist und wenigstens teilweise das durch das Gewicht des beweglichen Organes erzeugte Antriebsmoment nach unten kompensiert.

17. Vorrichtung nach Anspruch 15, dadurch gekennzeichnet, daß das System zum Massenausgleich ein einziges Rückholorgan (111) für eine Drehbewegung umfaßt, welches sowohl das durch das Gewicht des beweglichen Organes erzeugte Antriebsmoment nach unten als auch das durch die Translationsbewegung des Wagens an dem sektorartigen Ausrichtteil erzeugte zusätzliche Antriebsmoment kompensiert.

18. Vorrichtung nach Anspruch 1, dadurch gekennzeichnet, daß es ein Organ zur Voreinstellung in Translationsrichtung und in der Höhe in der vertikalen Referenzebene (7) für ein Maschinenaggregat aufweist, welches die Einrichtung (9) zum Drehantrieb und die Dreheinstellmittel (19) umfaßt, wobei die Einrichtung zur Voreinstellung umfaßt:
- eine mit dem Gestell (2) fest verbundene Führung (301), welche in der Referenzebene (7) senkrecht zu dem vertikalen, festen Bezugssystem (14) der Spindel (1a) des Ventiles ausgerichtet ist,
- eine an der Führung verschiebbare Platine (302),
- eine von der Platine getragene und unterhalb dieser montierte Führung (303), welche senkrecht zu der letzteren verlängert ist,
- eine Welle (304) zur Steuerung der Voreinstellung, welche an der Muffe (303) um eine in der Referenzebene senkrecht zu dem vertikalen, festen Bezugssystem (14) ausgerichtete Achse frei drehbar montiert ist,
- eine Einrichtung (305), welche die Drehbewegung der Welle (304) bezogen auf die Führung (301) in eine Translationsbewegung der Platine (302) umsetzt,
- eine Hülse (306), welche an der Führung (303) montiert ist, längs der Höhe der letzteren verschiebbar ist und das Maschinenaggregat trägt, und
- eine Einrichtung (307), welche die Drehbewegung der Welle (304) bezogen auf die Führung (303) in eine Translationsbewegung der Hülse (306) umsetzt.
